# EUROPEAN PATENT SPECIFICATION

(11) **EP 3 261 189 B1**
(45) Date of publication and mention of the grant of the patent: **30.01.2019**
(21) Application number: 17177427.6
(22) Date of filing: 22.06.2017
(51) Int. Cl.: H01R 13/52, H01R 13/627

(54) **ELECTRICAL CONNECTOR ASSEMBLY**
ELEKTROSTECKVERBINDERANORDNUNG
ENSEMBLE DE CONNECTEUR ÉLECTRIQUE

(30) Priority: 24.06.2016 JP 2016125747
(43) Date of publication of application: 27.12.2017
(73) Proprietor: Tyco Electronics Japan G.K., Kawasaki-shi, Kanagawa 213-8535 (JP); TOYOTA JIDOSHA KABUSHIKI KAISHA, Toyota-shi, Aichi 471-8571 (JP)
(72) Inventor: Matsumoto, Tsugumi, Kawasaki-shi, Kanagawa 213-8535 (JP); Komiyama, Ryuichi, Kawasaki-shi, Kanagawa 213-8535 (JP); Funayama, Tomoyuki, Toyota-shi, Aichi 471-8571 (JP)
(74) Representative: Johnstone, Douglas Ian

(56) References cited:
- EP-A2- 0 790 671
- WO-A1-2014/079978
- US-A- 5 382 174

## Description

### BACKGROUND OF THE INVENTION

### Field of the Invention

The present invention relates to an electrical connector assembly, and more particularly, to an electrical connector assembly having a light waterproofing or splash-proof performance.

### Description of the Related Art

In an electrical connector, a member called a rubber seal ring that is separate from a housing is interposed between, for example, a male housing and a female housing, so as to prevent water from entering the electrical connector.

In addition to the seal ring, it has been proposed to provide a housing with an inclined surface so as to discharge water entered a connector. For example, JP2011-150895A proposes to form an inclined surface on an inner surface of a case so that water entered from a gap between the case and the connector can flow toward an opening side. JP2011-150895A discloses that a groove extending toward the opening is formed in the inclined surface and a drainage performance can be improved due to capillary action caused by the groove.

The inclined surface disclosed in JP2011-150895A is provided between a hood of the case and the connector so as to discharge the water that has entered the connector. However, the inclined surface cannot prevent the water from entering the connector. Specifically, it is understood that the structure disclosed in JP2011-150895A includes a seal ring, which allows water to enter until the water reaches the range or position of the seal ring. The provision of the seal ring is advantageous in terms of waterproofing, but has a problem of, for example, an increased number of members. Accordingly, in the electrical connector that is placed at a position where water is less likely to fall, there is no need to provide a seal ring and it is sufficient to ensure a certain level of waterproof performance, or a light waterproofing or splash-proof performance.

A further prior art electrical connector assembly (on which the preamble of claim 1 is based) which includes first and second connectors is disclosed in WO 2014/079978 A1. The first connector includes a housing body, an outwardly projecting rear wall with a first surface which continuously surrounds the housing body, a lock arm for preventing disengagement of the connectors and a cover at the rear wall covering part of the lock arm. The second connector includes a hood which receives the first connector and has a second surface which confronts and is parallel to the first surface of the first connector.

Water falls generally onto an upper part of an electrical connector in the vertical direction. Accordingly, the water received on the upper part of the electrical connector is highly likely to enter the gap between the hood and the connector.

In view of the above-mentioned circumstances, an object of the present invention is to provide an electrical connector assembly capable of preventing water that has fallen onto an upper part of the electrical connector from entering a hood.

### SUMMARY OF THE INVENTION

An electrical connector assembly according to the present invention includes a first connector, and a second connector including a hood configured to receive the first connector through a mating opening or slot.

The first connector according to the present invention includes: a housing body configured to be received in the hood; a rear end wall being continuous or integral with the housing body and projecting outward in a circumferential direction in a flange shape; a lock arm configured to prevent the first connector and the second connector from being disengaged from each other; and a cover provided at the rear end wall and configured to cover a part of the lock arm.

According to the present invention, a first front end surface of the rear end wall facing the second connector in a region including the cover forms a uniformly continuous flat surface or a flat surface continuously surrounding the housing body.

According to the electrical connector assembly of the present invention, the first front end surface of the rear end wall of the first connector facing the second connector in the region including the cover disposed at an upper part of the electrical connector assembly in a usage state forms a uniformly continuous flat surface. Accordingly, when the first front end surface can be disposed in proximity to the second connector, it is possible to prevent water from entering the gap between the housing body and the hood.

In the state of the electrical connector assembly, for example, a side of the electrical connector assembly that is fixed to the printed wiring board and faces the printed wiring board in the usage state is defined as a lower side, and a side of the electrical connector assembly that is opposite to the lower side is defined as an upper side.

When the second connector according to the present invention includes a flange-like frame surrounding the mating opening of the hood, in a mated state of the first connector and the second connector, the first front end surface is parallel to a second front end surface of the frame facing the first front end surface.

This structure makes it possible to eliminate a region in which water is likely to accumulate between the first front end surface and the second front end surface.

In the present invention, a gap between the first front end surface of the rear end wall and the second front end surface of the frame is narrower than a gap between the housing body and the hood.

With this structure, even when water enters the gap between the first front end surface and the second front end surface of the frame, the water can be prevented from entering the gap between the housing body and the hood.

In the present invention, a gap between the first front end surface in the region including the cover and the second front end surface of the frame is preferably equal to or smaller than 1.25 mm so as to prevent water from entering the gap therebetween.

In the present invention, a gap between the first front end surface of the rear end wall and the second front end surface of the frame is preferably smaller than a distance from the cover to one end of the lock arm, the one end protruding from below the cover.

According to the present invention, the first front end surface of the rear end wall of the first connector which faces the second connector in the region including the cover disposed at the upper part of the electrical connector assembly in the usage state forms the uniformly continuous flat surface. Accordingly, when the first front end surface can be disposed in proximity to the second connector, it is possible to prevent water from entering the gap between the housing body and the hood.

### BRIEF DESCRIPTION OF THE DRAWINGS

FIG. 1 is a perspective view showing an electrical connector assembly according to an embodiment of the present invention;
FIG. 2 is a perspective view showing the electrical connector assembly according to the embodiment as viewed along a direction different from that in FIG. 1;
FIG. 3 is a plan view showing the electrical connector assembly shown in FIG. 1;
FIG. 4A is a side view showing the electrical connector assembly according to the embodiment; FIG. 4B is a sectional view of FIG. 4A; and FIG. 4C is a sectional view of the electrical connector assembly as viewed from a position different from that in FIG. 4B;
FIGS. 5A, 5B, and 5C are perspective views showing a male connector of the electrical connector assembly according to the embodiment as viewed from different directions; and
FIG. 6A is a plan view showing a frame of a female connector and a rear end wall of the male connector for explaining the operation and advantageous effects of the electrical connector assembly according to the embodiment; FIG. 6B is a front view thereof; and FIG. 6C is a side view thereof.

### DETAILED DESCRIPTION OF THE PREFERRED EMBODIMENTS

Embodiments of the present invention will be described below with reference to the accompanying drawings.

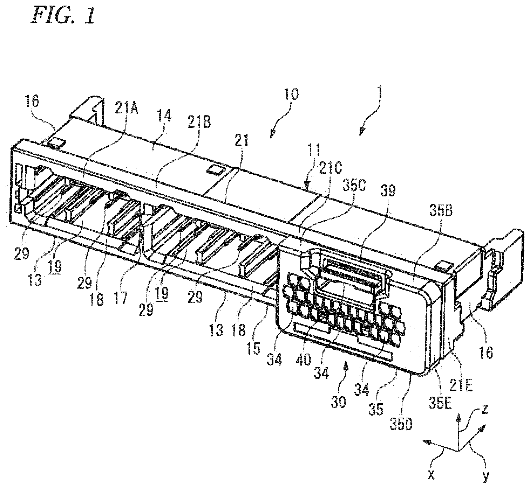

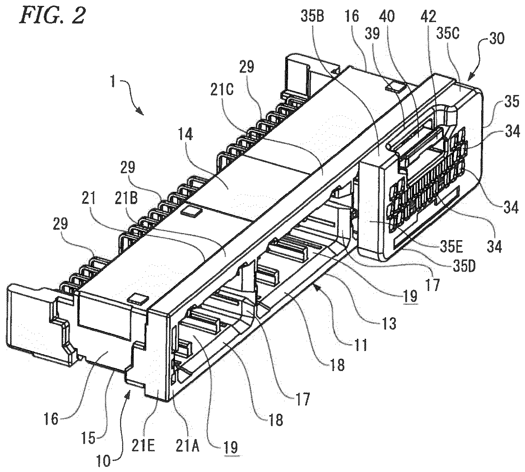

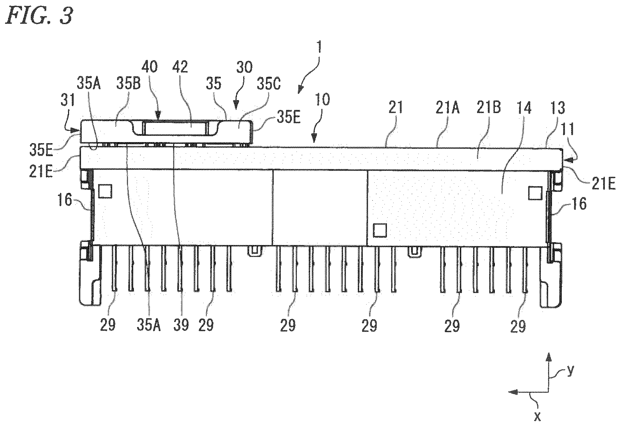

As shown in FIGS. 1 to 3, an electrical connector assembly 1 according to this embodiment includes: a female connector 10 that is configured to be fixed to, for example, a printed wiring board, and a male connector 30 configured to be mated with the female connector 10. The female connector 10 holds male contacts 29, and the male connector 30 holds female contacts that are not shown. In this embodiment, the female connector 10 has a structure in which three male connectors 30 are aligned and mated with the female connector 10. Note that FIGS. 1 to 3 illustrate only one male connector 30.

The female connector 10 includes a female housing 11 and the contacts 29. The housing 11 is integrally formed of resin having an electrical insulation. The contacts 29 are formed of a material having high conductivity, such as a copper-based material. The materials of the housing 11 and the contacts 29 are the same as those of the male connector 30.

The housing 11 holds the plurality of contacts 29 in a state where the contacts are arranged at intervals, and is provided with a hood 13 configured to be mated with the male connector 30. The hood 13 is a member having a rectangular tubular shape, and is provided with a mating opening or slot 18 that is an opening of the hood 13. The hood 13 includes receiving spaces 19 for receiving the male connectors 30. In this embodiment, the hood 13 is partitioned into three hoods by partition walls 17, and the male connectors 30 are mated with the receiving spaces 19 respectively corresponding to the three hoods 13.

One part of each of the contacts 29 that is configured to be electrically connected to a contact of the male connector 30 extends into the corresponding receiving space 19, and another part of each of the contacts 29 that is configured to be connected to the printed wiring board is pulled or extends backwardly out of the hood 13. The part of each of the contacts 29 that extends out backwardly is bent by 90 degrees in the middle of the contact. The contacts 29 are arranged in a plurality of columns in a width direction x and are also arranged in a plurality of rows in a height direction z.

Note that a side where the female connector 10 and the male connector 30 are mated together is defined as a front side, and a side opposite to the front side is defined as a rear side.

The hood 13 includes an upper wall 14, a lower wall 15, and a pair of side walls 16. The upper wall 14 and the lower wall 15 extend in the width direction x and are opposed to each other at a predetermined interval. The pair of side walls 16 connects both ends in the width direction x of each of the upper wall 14 and the lower wall 15 in the height direction z. In the hood 13, the above-mentioned partition walls 17 connect the upper wall 14 and the lower wall 15 to each other in the height direction z at positions where the hood 13 is partitioned into three hoods in the width direction x.

The female connector 10 according to this embodiment is mated with the male connector 30 and is disposed in such a manner that the height direction z matches the vertical direction, i.e., as shown in FIGS. 1 to 3, for example, in a usage state in which the connector is mounted on the printed wiring board.

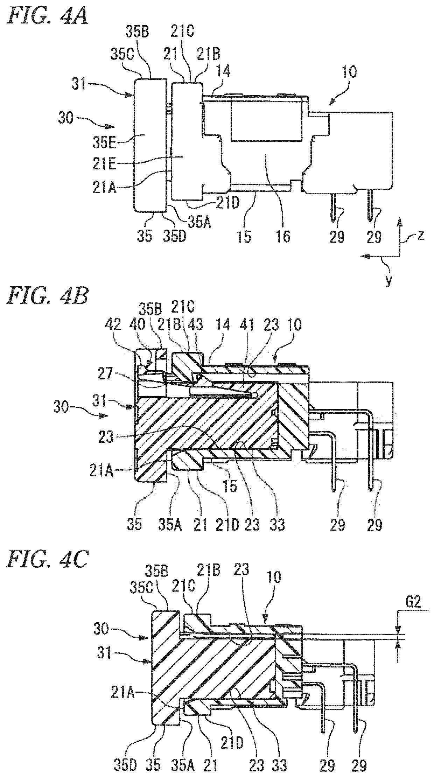

In the hood 13, as shown in FIG. 4B, a lock projection 27 that allows a lock projection 43 of a lock arm 40 of the male connector 30, which is described later, to be locked is provided at a side surface of a front end part facing the receiving space 19 of the upper wall 14. In the process of mating the male connector 30 with the female connector 10, the lock projection 43 of the male connector 30 climbs or rides over the lock projection 27 of the female connector 10, thereby preventing the female connector 10 and the male connector 30 from being disengaged from each other as shown in FIG. 4B. In order to release the locked state of the lock projection 27 and the lock projection 43, an operation end 42 of the lock arm 40 of the male connector 30 is pressed downward in FIG. 4B. In this state, when the male connector 30 is pulled from the female connector 10, the mated state of the female connector 10 and the male connector 30 can be released.

A frame 21 is provided at a front end of the hood 13. The frame 21 is provided so as to project outward in a circumferential direction in a flange shape from each of the upper wall 14, the lower wall 15, and the pair of side walls 16, and surrounds the mating opening 18. A front end surface (second front end surface) 21A of the frame 21 forms a uniformly continuous flat surface. When the female connector 10 and the male connector 30 are mated together, the front end surface 21A faces a front end surface (first front end surface) 35A of a rear end wall 35 of the male connector 30. Also an outer peripheral surface 21B of the frame 21 forms a uniformly continuous flat surface together with four surfaces respectively corresponding to the upper wall 14, the lower wall 15, and the pair of side walls 16. The four surfaces include a top surface 21C corresponding to the upper wall 14, a bottom surface 21D corresponding to the lower wall 15, and side surfaces 21E corresponding to the side walls 16.

Next, the male connector 30 will be described.

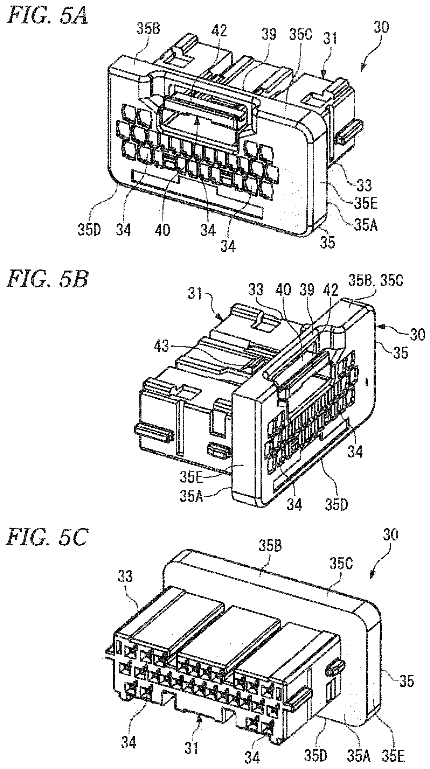

As shown in FIGS. 4A to 4C and FIGS. 5A to 5C, the male connector 30 includes a housing 31 and contacts (not shown) that are held in the housing 31. The housing 31 holds a number of contacts corresponding to the number of the contacts 29, which are held by the female connector 10, at the positions respectively corresponding to the positions of the contacts 29.

The housing 31 includes a housing body 33 that holds the contacts; the rear end wall 35 that is continuous with the rear end of the housing body 33; and the lock arm 40 that prevents the male connector 30 and the female connector 10 from being disengaged from each other.

As shown in FIGS. 5A to 5C, in the housing body 33, a plurality of contact accommodating holes 34 is formed along one direction. The contacts (not shown) are inserted into the respective contact accommodating holes 34. The contact accommodating holes 34 penetrate the rear end wall 35.

The rear end wall 35 is formed so as to project outward in the circumferential direction in a flange shape from the housing body 33, and the front end surface 35A of the rear end wall 35 forms a uniformly continuous flat surface. Also an outer peripheral surface 35B of the rear end wall 35 forms a uniformly continuous flat surface. The outer peripheral surface 35B includes a top surface 35C corresponding to the top surface 21C, a bottom surface 35D corresponding to the bottom surface 21D, and side surfaces 35E corresponding to the side surfaces 21E.

When the male connector 30 is mated with the female connector 10, the rear end wall 35 is disposed outside the hood 13.

The lock arm 40 is disposed at a central part in the width direction on an upper surface of the housing body 33. A front end or end side of the lock arm 40 forms a support end 41 that is fixed to the housing body 33, and a rear end or end side of the lock arm 40 forms the operation end 42. The lock arm 40 includes the lock projection 43 formed between the support end 41 and the operation end 42. The lock projection 43 is locked to the lock projection 27, which is formed on the hood 13, thereby preventing the male connector 30 from being disengaged from the female connector 10 from the state where the female connector 10 and the male connector 30 are mated together.

The housing body 33 includes a cover 39 that covers the lock arm 40 from above. The main purpose for providing the cover 39 is to prevent turning-up or erroneous operation of the lock arm 40.

In the cover 39, a void penetrating the rear end wall 35 is formed in a part of the rear end wall 35, and thus the cover 39 is provided as a component of the rear end wall 35. An upper surface of the cover 39 is flush with the top surface 35C of the rear end wall 35. Further, a front end surface of the cover 39 that is a surface facing the frame 21 in the mated state is formed so as to be flush with the front end surface 35A of the rear end wall 35. The front end surface 35A of the rear end wall 35, including the part corresponding to the cover 39, is formed of a flat surface.

The void is formed below the cover 39, and the rear end part including the operation end 42 of the lock arm 40 penetrates the void and projects rearward of the cover 39. The lock arm 40 is swingable about the support end 41 within the range of the void. The thickness of the cover 39 in a mating direction y is set to be smaller than the thickness of the other part of the rear end wall 35, thereby securing the operation on the operation end 42 of the lock arm 40.

In the state where the female connector 10 and the male connector 30 are mated together, as shown in FIGS. 1 to 3, the front end surface 35A of the rear end wall 35 and the front end surface 21A of the frame 21, which are each formed of a flat surface, are provided so as to be parallel to each other and in proximity to each other with a small gap interposed therebetween. The small gap is uniform on the circumference of the outer peripheral surface 21B and the outer peripheral surface 35B, i.e., between the top surface 21C and the top surface 35C, between the bottom surface 21D and the bottom surface 35D, and between the side surfaces 21E and the side surfaces 35E.

In particular, the rear end wall 35 and the frame 21 are formed in such a manner that the part corresponding to the front end surface 35A including the cover 39 of the rear end wall 35 is parallel to the front end surface 21A of the frame 21, i.e., so as not to form irregularities.

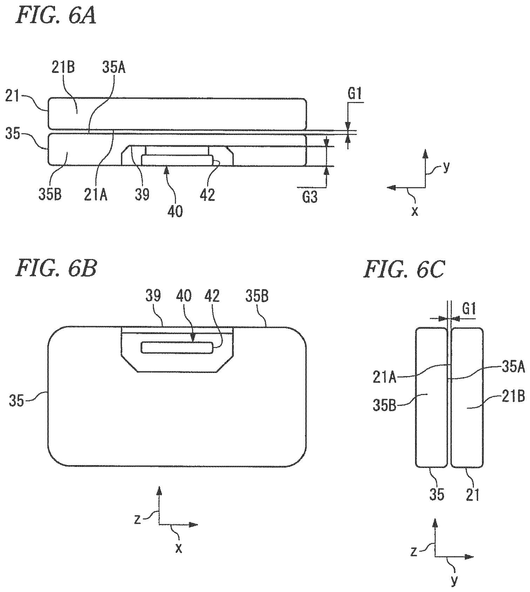

Next, the operation and advantageous effects of the electrical connector assembly 1 will be described with reference to FIGS. 6A to 6C.

In the electrical connector assembly 1, when the female connector 10 and the male connector 30 are mated together, the cover 39 disposed at an upper part of the electrical connector assembly covers the lock arm 40, thereby preventing turning-up or erroneous operation of the lock arm 40.

In the electrical connector assembly 1, the front end surface 21A of the frame 21 and the front end surface 35A of the rear end wall 35 face to each other with a small gap G1 interposed therebetween. Accordingly, even when water falls onto a boundary between the front end surface 21A and the front end surface 35A, the water is less likely to enter the gap between the front end surface 21A and the front end surface 35A. In particular, since the front end surface 21A and the front end surface 35A are parallel to each other with the small gap G1 interposed therebetween, including the region in which the cover 39 is provided, the water is less likely to enter the gap therebetween.

Further, since the gap G1 is narrow, even when water falls onto the gap G1, the water flows in the width direction x along the gap G1 between the front end surface 21A and the front end surface 35A due to the capillary action. When the water reaches the both ends in the width direction x, the water then flows downward in the height direction z through the gap G1 between the rear end wall 35 and the frame 21. Thus, even when the water enters the gap G1, the water is accumulated in the gap G1 between the front end surface 21A and the front end surface 35A, or is discharged downward from the gap G1, so that the water is less likely to enter the hood 13. In particular, when this gap G1 is narrower than a gap G2 between the hood 13 and the housing body 33, the water can be prevented from entering the gap G2 between the hood 13 and the housing body 33, even when the water enters the gap between the front end surface 21A and the front end surface 35A.

In this case, in order to cause the capillary action between the rear end wall 35 and the frame 21, the gap G1 is preferably 3 mm or less, more preferably, 1.25 mm or less, and still more preferably, 1.0 mm, so as to allow water droplets to cross the gap therebetween. With this structure, the water accumulated in the gap between the rear end wall 35 and the frame 21 can be prevented from entering the gap G2.

Further, the gap G1 is preferably smaller than a distance G3 from the cover 39 to the operation end 42 of the lock arm 40. When the gap G1 is narrowed as described above, the water is accumulated in the gap between the cover 39 (front end surface 35A) and the frame 21 (front end surface 21A) due to the capillary action and surface tension, and thus is less likely to enter the lock part.

The present invention is not limited to the above embodiments. The structures illustrated in the above embodiments may be selected or omitted, or may be modified as appropriate to other structures without departing from the gist of the present invention.

For example, in the electrical connector assembly 1 described above, the gap G1 in the entire region in the circumferential direction of the front end surface 21A and the front end surface 35A is narrow and parallel. However, the present invention is not limited to this. Since an object of the present invention is to prevent water that has fallen onto the upper part of the electrical connector assembly from entering the electrical connector assembly, it is necessary, at least, that the gap formed in the upper part, i.e., the gaps formed in the part corresponding to the top surface 21C and the top surface 35C in this embodiment, be narrow and parallel.

Further, in the electrical connector assembly 1, the female connector 10 includes the three partitioned hoods 13. However, this is merely an example, and the number of the partitioned hoods 13 is arbitrary. Further, the shapes and dimensions of the female connector 10 and the male connector 30 are also arbitrary.

Furthermore, in the electrical connector assembly 1 of this embodiment, the height direction z is set so as to match the vertical direction. However, even when the width direction x is set so as to match the vertical direction, the same advantageous effects as those described above can be obtained.

## Claims

1. An electrical connector assembly (1) comprising:
a first connector (30); and
a second connector (10) including a hood (13) configured to receive the first connector (30) through a mating opening (18) and a flange-like frame (21) surrounding the mating opening (18) of the hood (13), wherein
the first connector (30) includes:
a housing body (33) configured to be received in the hood (13);
a rear end wall (35) continuous with the housing body (33) and projecting outward in a circumferential direction in a flange shape;
a lock arm (40) configured to prevent the first connector (30) and the second connector (10) from being disengaged from each other; and
a cover (39) provided at the rear end wall (35) and configured to cover a part of the lock arm (40), wherein
a first front end surface (35A) of the rear end wall (35) facing the second connector (10) in a region including the cover (39) forms a uniformly continuous flat surface continuously surrounding the housing body (33),
wherein in a mated state of the first connector (30) and the second connector (10), the first front end surface (35A) is parallel to a second front end surface (21A) of the frame (21), the second front end surface (21A) facing the first front end surface (35A),
**characterised in that** a gap (G1) between the first front end surface (35A) of the rear end wall (35) and the second front end surface (21A) of the frame (21) is narrower than a gap (G2) between the housing body (33) and the hood (13).

2. The electrical connector assembly (1) according to claim 1, wherein a gap (G1) between the first front end surface (35A) in a region including the cover (39) and the second front end surface (21A) of the frame (21) is equal to or less than 1.25 mm.

3. The electrical connector assembly (1) according to claim 1, wherein the gap (G1) between the first front end surface (35A) of the rear end wall (35) and the second front end surface (21A) of the frame (21) is smaller than a distance (G3) from the cover (39) to one end (42) of the lock arm (40), the one end (42) protruding from below the cover (39).

## Patentansprüche

1. Elektrische Verbinderanordnung (1), die Folgendes umfasst:
einen ersten Verbinder (30); und
einen zweiten Verbinder (10) mit einer Haube (13), konfiguriert zum Aufnehmen des ersten Verbinders (30) durch eine Gegenöffnung (18), und einem die Gegenöffnung (18) der Haube (13) umgebenden flanschartigen Rahmen (21), wobei
der erste Verbinder (30) Folgendes beinhaltet:
einen Gehäusekörper (33), konfiguriert zum Aufnehmen in der Haube (13);
eine hintere Endwand (35) fortlaufend mit dem Gehäusekörper (33), die in einer Umfangsrichtung in einer Flanschform nach außen vorsteht;
einen Arretierarm (40), konfiguriert zum Verhindern, dass der erste Verbinder (30) und der zweite Verbinder (10) voneinander gelöst werden; und
eine Abdeckung (39), die an der hinteren Endwand (35) vorgesehen und zum Bedecken eines Teils des Arretierarms (40) konfiguriert ist, wobei
eine erste vordere Endfläche (35A) der hinteren Endwand (35), die dem zweiten Verbinder (10) in einer die Abdeckung (39) beinhaltenden Region zugewandt ist, eine gleichmäßig fortlaufende flache Oberfläche bildet, die den Gehäusekörper (33) fortlaufend umgibt,
wobei in einem zusammengefügten Zustand des ersten Verbinders (30) und des zweiten Verbinders (10) die erste vordere Endfläche (35A) parallel zu einer zweiten vorderen Endfläche (21A) des Rahmens (21) ist, wobei die zweite vordere Endfläche (21A) der ersten vorderen Endfläche (35A) zugewandt ist,
**dadurch gekennzeichnet, dass** ein Spalt (G1) zwischen der ersten vorderen Endfläche (35A) der hinteren Endwand (35) und der zweiten vorderen Endfläche (21A) des Rahmens (21) schmäler ist als ein Spalt (G2) zwischen dem Gehäusekörper (33) und der Haube (13).

2. Elektrische Verbinderbaugruppe (1) nach Anspruch 1, wobei ein Spalt (G1) zwischen der ersten vorderen Endfläche (35A) in einer die Abdeckung (39) beinhaltenden Region und der zweiten vorderen Endfläche (21A) des Rahmens (21) gleich oder kleiner als 1,25 mm ist.

3. Elektrische Verbinderbaugruppe (1) nach Anspruch 1, wobei der Spalt (G1) zwischen der ersten vorderen Endfläche (35A) der hinteren Endwand (35) und der zweiten vorderen Endfläche (21A) des Rahmens (21) kleiner ist als ein Abstand (G3) zwischen der Abdeckung (39) und einem Ende (42) des Arretierarms (40), wobei das eine Ende (42) von unterhalb der Abdeckung (39) vorsteht.

## Revendications

1. Ensemble de connecteur électrique (1) comprenant :
un premier connecteur (30) ; et
un second connecteur (10) comportant une coiffe (13) configurée pour recevoir le premier connecteur (30) à travers une ouverture d'accouplement (18) et un cadre en forme de bride (21) qui entoure l'ouverture d'accouplement (18) de la coiffe (13), dans lequel
le premier connecteur (30) comporte :
un corps de logement (33) configuré pour être reçu dans la coiffe (13) ;
une paroi d'extrémité arrière (35) continue avec le corps de logement (33) et saillant vers l'extérieur dans un sens circonférentiel dans une forme de bride ;
un bras de verrouillage (40) configuré pour empêcher le premier connecteur (30) et le second connecteur (10) de se séparer l'un de l'autre ; et
un couvercle (39) fourni au niveau de la paroi d'extrémité arrière (35) et configuré pour recouvrir une partie du bras de verrouillage (40), dans lequel
une première surface d'extrémité avant (35A) de la paroi d'extrémité arrière (35) faisant face au second connecteur (10) dans une région comportant le couvercle (39) forme une surface plate uniformément continue qui entoure continûment le corps de logement (33),
dans lequel dans un état accouplé du premier connecteur (30) et du second connecteur (10), la première surface d'extrémité avant (35A) est parallèle à une seconde surface d'extrémité avant (21A) du cadre (21), la seconde surface d'extrémité avant (21A) faisant face à la première surface d'extrémité avant (35A),
**caractérisé en ce qu'**un espace (G1) entre la première surface d'extrémité avant (35A) de la paroi d'extrémité arrière (35) et la seconde surface d'extrémité avant (21A) du cadre (21) est plus étroit qu'un espace (G2) entre le corps de logement (33) et la coiffe (13).

2. Ensemble de connecteur électrique (1) selon la revendication 1, dans lequel un espace (G1) entre la première surface d'extrémité avant (35A) dans une région comportant le couvercle (39) et la seconde surface d'extrémité avant (21A) du cadre (21) est égal ou inférieur à 1,25 mm.

3. Ensemble de connecteur électrique (1) selon la revendication 1, dans lequel l'espace (G1) entre la première surface d'extrémité avant (35A) de la paroi d'extrémité arrière (35) et la seconde surface d'extrémité avant (21A) du cadre (21) est inférieur à une distance (G3) allant du couvercle (39) jusqu'à une extrémité (42) du bras de verrouillage (40), cette extrémité (42) saillant depuis le dessous du couvercle (39).
